Europäisches Patentamt

European Patent Office

Office européen des brevets

(11) Veröffentlichungsnummer: **0 363 666**

**A2**

## (12) EUROPÄISCHE PATENTANMELDUNG

(21) Anmeldenummer: **89116970.8**

(22) Anmeldetag: **13.09.89**

(51) Int. Cl.⁵: **G02B 26/10**

(30) Priorität: **04.10.88 DE 3833727**

(43) Veröffentlichungstag der Anmeldung:
**18.04.90 Patentblatt 90/16**

(84) Benannte Vertragsstaaten:
**BE DE GB LU NL**

(71) Anmelder: **Erwin Sick GmbH Optik-Elektronik**
**Sebastian-Kneipp-Strasse 1**
**D-7808 Waldkirch(DE)**

(72) Erfinder: **Ostertag, Klaus**
**Engadiner Strasse 38**
**D-8000 München 71(DE)**
Erfinder: **Pietzsch, Karl, Dr.**
**Richard-Wagner-Strasse 2**
**D-8192 Geretsried 2(DE)**
Erfinder: **Schael, Rudi**
**Isardamm 9**
**D-8192 Geretsried 1(DE)**
Erfinder: **Zorn, Wolfgang**
**Annette-Kolb-Anger 13**
**D-8000 München 83(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Optische Abtastvorrichtung.**

(57) Die Erfindung betrifft eine optische Abtastvorrichtung zum zeilenweisen Abtasten einer Materialbahn quer zu deren Vorschubrichtung mit einem Laser (20) dessen Ausgangslichtstrahl von einer anamorphotischen Strahlaufweiteoptik (10) über ein Spiegelrad (22) auf eine Scan-Optik (21) gelenkt wird, wobei die Scan-Optik (21) einen Abtastlichtfleck in einer Abtastebene (23) erzeugt. Die Strahlaufweiteoptik (10) wird dabei von einer nur ebene Flächen aufweisenden anamorphotischen Aufweiteanordnung (12) und einem afokalen Pupillenvergrößerer (13) gebildet.

Fig. 1

Die Erfindung betrifft eine optische Abtastvorrichtung zum zeilenweisen Abtasten einer Materialbahn quer zu deren Vorschubrichtung mit einem Laser, dessen Ausgangslichtstrahl von einer anamorphotischen Strahlaufweiteoptik über ein Spiegelrad auf eine Scanoptik gelenkt wird, die einen Abtastlichtfleck in einer Abtastebene erzeugt.

Mit derartigen optischen Abtastvorrichtungen werden Materialbahnen auf Oberflächenfehler und/oder Lücken untersucht. Dazu wird die in ihrer Längsrichtung transportierte Materialbahn, die in der Abtastebene angeordnet ist, quer zu ihrer Transportrichtung von dem Abtastlichtfleck abgetastet. Das von der Materialbahn reflektierte und/oder durchgelassene Licht wird von einer geeigneten Empfängeranordnung erfaßt, die dementsprechende Ausgangssignale an einen Prozeßrechner liefert, der diese Signale zur Fehlererkennung auswertet.

Um in Richtung des Materialtransportes oder -vorschubs eine lückenlose Überwachung der Materialbahn zu erhalten, ist es erforderlich, daß die vom Abtastlichtfleck erzeugte Abtastzeile eine bestimmte Breite aufweist, die von der Abtastgeschwindigkeit- und der Vorschubgeschwindigkeit der Materialbahn abhängt.

Andererseits soll der Abtastlichtfleck in Abtastrichtung sehr schmal sein, um eine möglichst hohe Auflösung bei der Fehlererkennung zu erzielen, also um auch sehr kleine Fehler erkennen zu können.

Es ist daher erforderlich, daß der Abtastlichtfleck in der Abtastebene senkrecht zur Abtastrichtung, also in Richtung des Materialvorschubs, eine variable, einstellbare und i.a. größere Ausdehnung aufweist, als in der Abtastrichtung quer zur Materialvorschubrichtung.

Um einen derartigen Abtastlichtfleck zu erzeugen ist es bekannt, eine anamorphotische Strahlaufweiteoptik zu verwenden, die eine Zylinderlinse umfaßt, so daß der Abtastlichtstrahl im Bereich der Abtastebene zwei räumlich getrennte, hintereinanderliegende und senkrecht aufeinanderstehende Brennlinien besitzt. Dabei liegt die Brennlinie, die senkrecht auf der Abtastlinie steht in der Abtastebene, während die andere Brennlinie, die parallel zur Abtastlinie verläuft bzw. senkrecht auf der Materialvorschubrichtung steht, vor oder hinter der Abtastebene.

Durch eine Verschiebung der Zylinderlinse entlang der optischen Achse kann die räumliche Lage der zweiten Brennlinie entlang des Hauptstrahls verändert werden. Dadurch ändert sich die Länge des Abtastlichtflecks in der Abtastebene, weil der Abtastlichtfleck mehr oder weniger stark defokussiert wird.

Ein Nachteil dieser Art der Längenverstellung des Abtastlichtflecks besteht darin, daß die in Vorschubrichtung liegende Brennlinie nicht in der Abtastlinie liegt. Fällt diese Brennlinie nun in die Nähe des Austrittsfensters der Abtastvorrichtung oder in die Nähe des Eintrittsfensters des Empfängers, dann können dort kleinere Störungen, z. B. Staub oder Kratzer, Scheinfehlersignale hervorrufen.

Ein weiterer Nachteil ergibt sich durch die Defokussierung des Laserstrahls in der Abtastebene, durch die sich jede strahlbegrenzende Blende oder Kante unter Umständen als starke Modulation in der Intensitätsverteilung des Laserlichtflecks in der Abtastebene bemerkbar macht. Das führt ebenfalls zu einer unerwünschten Verfälschung der Fehlersignale.

Die der Erfindung zugrunde liegende Aufgabe ist es, eine optische Abtastvorrichtung der eingangs genannten Art zu schaffen, die bei einem hohen Auflösungsvermögen eine störungsfreie Fehlererkennung sicherstellt.

Diese Aufgabe wird erfindungsgemäß dadurch gelöst, daß die Strahlaufweiteoptik von einer nur ebene Flächen aufweisenden anamorphotischen Aufweiteanordnung und einem afocalen Pupillenvergrößerer gebildet wird.

Durch die erfindungsgemäße Kombination einer nur ebene Flächen aufweisenden anamorphotischen Aufweiteanordnung mit einem afokalen Pupillenvergrößerer wird eine optische Abtastvorrichtung geschaffen, deren Abtastlichtfleck in Abtastrichtung und quer dazu eine unterschiedliche Ausdehnung aufweist, ohne daß eine Defokussierung des Abtastlichtflecks erforderlich wäre. Der Abtastlichtfleck wird also durch die Fokussierung des Abtastlichtstrahls in die Abtastebene gebildet.

Dabei ist es von wesentlichem Vorteil, daß durch die anamorphotische Strahlaufweitung mittels ebener Flächen, die vorzugsweise nur in einer Richtung senkrecht zur optischen Achse erfolgt, keine Wellenfrontdeformation, sondern nur die gewünschte Querschnittsänderung der Pupille eintritt. Dabei bleibt die Aufweiteanordnung insbesondere bei telezentrischer Benutzung frei von Astigmatismus, so daß sich der Abtastlichtfleck durch nahezu fehlerfreie Fokussierung in einen Brennpunkt erzeugen läßt.

Bei einer Weiterbildung der Erfindung ist vorgesehen, daß die Strahlaufweiteoptik zusätzlich eine Grundaufweiteoptik enthält, die ein erstes Objektiv mit kurzer Brennweite, in dessen hinterem Brennpunkt eine Modenblende angeordnet ist, und ein zweites Objektiv mit relativ langer Brennweite aufweist, dessen vorderer Brennpunkt mit dem hinteren Brennpunkt des ersten Objektivs zusammenfällt, wobei das zweite Objektiv wenigstens bezüglich der sphärischen Aberration korrigiert ist.

Durch den Aufbau der Grundaufweiteoptik nach dem Prinzip eines astronomischen Fernrohrs, wobei in dem gemeinsamen Brennpunkt der Objektive eine Modenblende angeordnet ist, läßt sich eine im wesentlichen fehlerfreie ebene Welle erzeugen, deren Genauigkeit zumindest besser als λ/4 ist. Eine derartig genaue ebene Welle ist erforderlich, um die Fehlerauflösung in Abtastrichtung so hoch zu machen, daß die Auflösung der Abtastung praktisch nur durch Beugung begrenzt wird, wie dies z. B. aus dem Mikroskopbereich bekannt ist.

Bei einem anderen Ausführungsbeispiel der Erfindung ist vorgesehen, daß die Grundaufweiteoptik aus einem Objektiv mit negativer Brennweite und einem Objektiv mit positiver Brennweite in Form eines umgedrehten Galilie-Fernrohrs gebildet ist.

Ein weiteres Ausführungsbeispiel der Erfindung ist dadurch gekennzeichnet, daß die anamorphotische Aufweiteanordnung zumindest ein Keilprisma enthält. Hierdurch wird eine anamorphotische Aufweitung des Laserstrahls in einer Richtung senkrecht zur optischen Achse erreicht, wobei die eindimensionale Querschnittsveränderung der ebenen Welle durch ebene, brechende Flächen praktisch keine Wellenaberrationen bewirkt.

Bei einer Weiterbildung der Erfindung ist vorgesehen, daß die anamorphotische Aufweiteanordnung zwei Keilprismen umfaßt, deren Keilkanten senkrecht zur optischen Achse und senkrecht zur Abtastrichtung angeordnet sind, wobei die Keilprismen den gleichen Keilwinkel α aufweisen.

Hierdurch läßt sich mit der anamorphotischen Aufweiteoptik eine relativ große Strahlaufweitung bei einfachem optischen Aufbau erreichen.

Bei einem bevorzugten Ausführungsbeispiel der Erfindung ist vorgesehen, daß die Keilkante des ersten Keilprismas auf einer Seite der optischen Achse angeordnet ist, während die Keilkante des zweiten Keilprismas auf der anderen Seite der optischen Achse liegt, wobei der Hauptstrahl mit der ersten brechenden Fläche jedes Keilprismas den gleichen Winkel einschließt.

Hierdurch wird erreicht, daß der Hauptstrahl der Strahlaufweiteoptik durch die anamorphotische Aufweiteanordnung nur parallel zu sich versetzt wird, wodurch ein relativ einfacher, gut zu justierender mechanischer Aufbau der Strahlaufweiteoptik erzielt wird.

Um eine eindimensionale Strahlaufweitung mit sehr großem Aufweitungsfaktor, also mit einem Aufweitungsfaktor >_= 10, zu erreichen, wobei der Hauptstrahl nach der eindimensionalen Strahlaufweitung zumindest parallel zur optischen Achse der Grundaufweitungsoptik verlaufen soll, ist bei einer weiteren Ausbildung der Erfindung vorgesehen, daß die anamorphotische Aufweiteanordnung eine gerade Anzahl von Keilprismen aufweist, von denen je zwei eine Parallelversetzung des Hauptstrahls bewirken.

Bei einem besonders bevorzugtem Ausführungsbeispiel der Erfindung ist ferner vorgesehen, daß die anamorphotische Aufweiteanordnung aus vier Keilprismen gebildet ist, wobei die Parallelversetzung des Hauptstrahls durch die ersten beiden Keilprismen entgegengesetzt gleich der durch die zweiten beiden Keilprismen bewirkten Parallelversetzung ist. Auf diese Weise wird erreicht, daß die optische Achse vor und hinter der Aufweiteoptik miteinander fluchtend ausgerichtet ist, so daß bei einer optischen Abtastvorrichtung, bei der die anamorphotische Aufweiteanordnung zwischen der Grundaufweiteanordnung und dem Pupillenvergrößerer oder zwischen dem Pupillenvergrößerer und dem Drehspiegel angeordnet ist, eine derartige anamorphotische Aufweiteanordnung ohne weiteres gegen eine andere mit einem anderen Aufweitungsfaktor ausgetauscht werden kann, ohne daß die Grundjustierung der optischen Abtastvorrichtung geändert werden müßte. Hierdurch wird die Anpassungsfähigkeit der optischen Abtastvorrichtung an bestimmte Einsatzbedingungen wesentlich verbessert.

Bei einer bevorzugten Weiterbildung der Erfindung ist vorgesehen, daß der Pupillenvergrößerer von einem afokalen Vario-Objektiv gebildet ist, wobei das Vario-Objektiv wenigstens bezüglich der sphärischen Aberration korrigiert ist.

Hierdurch läßt sich eine kontinuierlich verstellbare Pupillenvergrößerung erreichen, so daß die Länge des Abtastlichtflecks in der Abtastebene senkrecht zur Abtastlinie innerhalb bestimmter Grenzen verstellt werden kann, um den Abtastlichtfleck in Abhängigkeit von der Abtastgeschwindigkeit an die Vorschubgeschwindigkeit für die Materialbahn anzupassen, so daß eine 100%-ige, lückenlose Überwachung der Materialbahn ermöglicht wird. Außerdem läßt sich auf diese Weise die Wellenaberration für die gesamte Strahlaufweiteoptik kleiner oder gleich λ /4 machen, so daß die gesamte Strahlaufweiteoptik eine beugungsbegrenzte anastigmatische-anamorphotische Strahlaufweitung bewirkt. Wird als afocaler Pupillenvergrößerer ein Varioobjektiv verwendet, so ändert sich mit der Änderung des Aufweitungsfaktors des Varioobjektivs nicht nur die Strahlbreite auf der Spiegelradfacette, wodurch die Abtastlichtflecklänge in der Abtastebene in Richtung des Materialvorschubs verändert wird, sondern auch die Strahllänge auf der Spiegelradfacette. Das bedeutet, daß bei einem großen Lichtfleck auf dem Spiegelrad, also bei einem kleinen Abtastlichtfleck in der Abtastebene, das Spiegelrad mehr überleuchtet wird, als bei einem kleinen Lichtfleck auf dem Spiegelrad. In diesem Fall wird nicht das gesamte Licht des Lichtstrahls vom Spiegelrad in die Abtastebene umgelenkt, so daß die Lichtintensität des Abtastlichtflecks in der Abtastebene verringert wird. Hierdurch wird bewirkt, daß die Intensität des Abtastlichtflecks und auch in geringerem Maße die Intensitätsverteilung des Abtastlichtflecks entlang der Abtastlinie in der Abtastebene mit der Änderung der Abtastlichtflecklänge variiert.

Hierdurch wird die Änderung des mittels eines Varioobjektives realisierbaren Aufweitungsfaktors für den Lichtstrahl begrenzt. Um die Länge des Abtastlichtflecks in der Abtastebene ohne Intensitätsverluste über einen möglichst weiten Bereich ändern zu können, ist daher bei einem besonders vorteilhaften Ausführungsbeispiel der Erfindung vorgesehen, daß der afokale Pupillenvergrößerer von einem anamorphotischen Varioobjektiv gebildet ist.

Dabei ist es besondere vorteilhaft, wenn der afokale Pupillenvergrößerer von einer nur ebene Flächen aufweisenden zweiten anamorphotischen Aufweiteanordnung gebildet ist, wobei die zweite anamorhotische Aufweiteanordnung einen variablen Aufweitungsfaktor aufweist.

In diesem Fall beeinflußt der anamorphotisch arbeitende Pupillenvergrößerer die Pupille des Strahlengangs, also die Strahlbreite, nur in einer Richtung, quer zur Abtastrichtung. Damit arbeitet die Strahlaufweitung zur Aus- bzw. Über leuchtung der Spiegelradfacette in Abtastrichtung völlig unabhängig von der Strahlaufweitung zur Änderung der Abtastlichtflecklänge quer zur Abtastrichtung.

Bei einer vorteilhaften Ausführungsform der Erfindung ist vorgesehen, daß der afokale Pupillenvergrößerer zumindest ein Keilprisma enthält, das um eine parallel zu seiner Keilkante verlaufenden Drehachse drehbar ist.

Ein vorteilhaftes Ausführungsbeispiel der Erfindung zeichnet sich dadurch aus, daß der afokale Pupillenvergrößerer zwei drehbare Keilprismen umfaßt, deren Keilkanten senkrecht zur optischen Achse und parallel zur Abtastrichtung angeordnet ist. Hierdurch läßt sich eine Strahlaufweitung erreichen, ohne daß im parallelen Strahlengang geometrisch-optische Apparationen auftreten. Dabei läßt sich durch die drehbare Anordnung der Keilprismen der Strahlaufweitefaktor jeweils an die gegebenen Erfodernisse für die Größe des Abtastlichtflecks anpassen.

Um den Versatz des Hauptstrahls gegenüber der optischen Achse möglichst gering zu halten, ist in einer anderen Ausführungsform der Erfindung vorgesehen, daß der Abstand der Drehachsen der Keilprismen insbesondere senkrecht zur optischen Achse verstellbar ist.

Bei einer bevorzugten Ausführungsform der Erfindung ist vorgesehen, daß der afokale Pupillenvergrößerer aus Keilprismen besteht, die alle den gleichen Keilwinkel aufweisen.

Bei einer anderen Weiterbildung der Erfindung ist vorgesehen, daß die Keilkante des ersten Keilprismas des afokalen Pupillenvergrößerers auf einer Seite der optischen Achse angeordnet ist, während die Keilkante des zweiten Keilprismas auf der anderen Seite der optischen Achse angeordnet ist, während die Keilkante des zweiten Keilprismas auf der anderen Seite der optischen Achse liegt. Hierdurch läßt sich auf besonders einfache Weise der Hauptstrahl stets parallel zur optischen Achse ausrichten.

Um die Einstellung des veränderbaren Aufweitefaktors des afokalen Pupillenvergrößerers auf möglichst einfache Weise einstellen zu können, ist bei einer Weiterbildung der Erfindung vorgesehen, daß die Dreh- und/oder Verschiebebewegungen der Keilprismen des afokalen Pupillenvergrößerers mechanisch oder elektronisch miteinander gekoppelt sind.

Bei einer anderen Weiterbildung der Erfindung ist vorgesehen, daß der afokale Pupillenvergrößerer aus einer geraden Anzahl von Keilprismen besteht, von denen je zwei eine Parallelversetzung des Hauptstrahls bewirken.

Um den Strahlversatz des Hauptstrahls so zu kompensieren, daß die optische Achse der Aufweiteoptik unverändert bleibt, ist bei einem besonders vorteilhaften und bevorzugten Ausführungsbeispiel der Erfindung vorgesehen, daß der afokale Pupillenvergrößerer aus vier Teilprismen gebildet ist, wobei die Parallelversetzung des Hauptstrahls durch die ersten beiden Teilprismen entgegengesetzt gleich der durch die zweiten beiden Keilprismen bewirkten Parallelversetzung ist.

Diese erfindungsgemäße Anordnung hat darüber hinaus noch den Vorteil, daß der Aufweitungsfaktor über einen sehr weiten Bereich variiert werden kann. Insbesondere wird eine Änderung des Aufweitungsfaktors von etwa 1 : 70 bis 70 : 1 ermöglicht.

Bei einer praktischen Ausführung der Erfindung ist vorgesehen, daß die Keilprismen des afokalen Pupillenvergrößerers um eine senkrecht zur optischen Achse verschiebbare, durch den Mittelpunkt einer brechenden Fläche des Keilprismas verlaufenden Drehachse drehbar sind, wobei die Drehachsen der Keilprismen in deren längeren brechenden Fläche angeordnet sind.

Um bei der Veränderung des Aufweitungsfaktors sowohl die Richtung der optischen Achse beizubehalten, und insbesondere auch jeglichen Strahlversatz zu verhindern, ist bei einem weiteren bevorzugten Ausführungsbeispiel der Erfindung vorgesehen, daß der afokale Pupillenvergrößerer vier dreh- und verschiebbare Keilprismen aufweist, wobei die Drehrichtungen des ersten und des letzten Keilprismas gleich und entgegengesetzt zur Drehrichtung des zweiten und dritten Keilprismas sind, wobei die Größe des Drehwinkels zwischen Strahlaustrittsfläche des Keilprismas und optischer Achse des ersten und des dritten Keilprismas gleich sind und wobei die Drehwinkel des zweiten und des vierten Keilprismas gleich sind, wobei die beiden mittleren Keilprismen des aus vier Keilprismen bestehenden afokalen Pupillenvergrößerers gemeinsam senkrecht zur optischen Achse und parallel zur Aufweitungsrichtung verschiebbar angeordnet sind.

Hierdurch läßt sich zusätzlich erreichen, daß die Flächen der einzelnen Keilprismen in optimaler Weise vom aufzuweitenden Strahl beaufschlagt werden.

Bei einer anderen Ausführungsform der Erfindung ist vorgesehen, daß die beiden ersten Keilprismen und die beiden hinteren Keilprismen des afokalen Pupillenvergrößerers jeweils gemeinsam senkrecht zur optischen Achse und parallel zur Aufweitungsrichtung verschiebbar angeordnet sind.

Um den eingestellten Strahlaufweitungsfaktor des afokalen Pupillenvergrößerers auch für den Fall konstantzuhalten, daß Licht unterschiedlicher Wellenlänge verwendet wird, ist bei einem anderen Ausführungsbeispiel der Erfindung vorgesehen, daß jeweils zwei aufeinanderfolgende Keilprismen des aus einer geraden Anzahl von Keilprismen bestehenden afokalen Pupillenvergrößerers aus Gläsern mit unterschiedlicher Dispersion aufgebaut sind, so daß Farbfehler des Pupillenvergrößerers jeweils paarweise korrigiert werden.

Die Erfindung wird im folgenden beispielsweise anhand der Zeichnung näher beschrieben; in dieser zeigt:

Fig. 1 einen schematischen Schnitt durch eine optische Abtastvorrichtung parallel zur Abtastrichtung,

Fig. 2 einen schematischen Schnitt durch eine optische Abtastvorrichtung parallel zur Vorschubrichtung einer Materialbahn,

Fig. 3 eine schematische perspektivische Ansicht einer Strahlaufweitoptik für eine optische Abtastvorrichtung nach Figur 1,

Fig. 4 eine Prismenanordnung mit vier Prismen für eine anamorphotische Strahlaufweitoptik,

Fig. 5 einen schematischen Schnitt entsprechend Fig. 2 durch eine andere optische Abtastvorrichtung und

Fig. 6 einen afokalen Pupillenvergrößerer mit vier Keilprismen.

In den verschiedenen Figuren der Zeichnung sind einander entsprechende Bauteile mit gleichen Bezugszeichen bezeichnet.

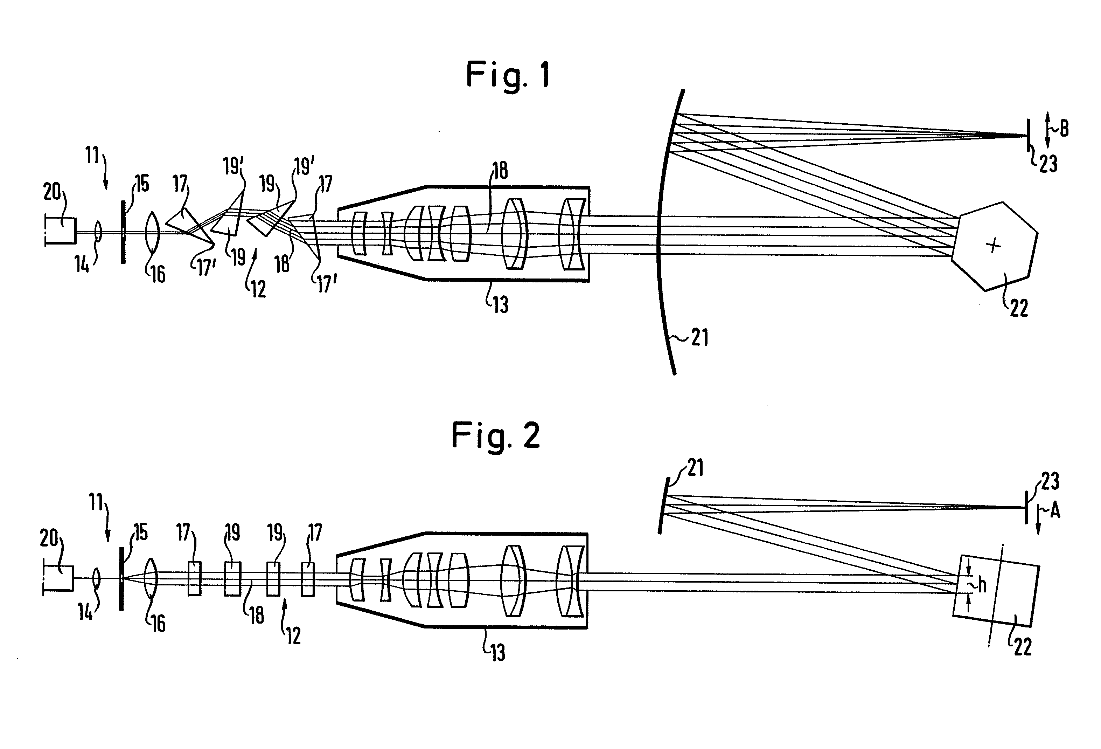

Figur 1 und 2 zeigen eine optische Abtastvorrichtung mit einem als Lichtquelle dienenden Laser 20 dessen Ausgangslichtstrahl von einem ersten Objektiv 14, das z. B. ein Mikroskopobjektiv sein kann, auf eine als Raumfilter dienende Modenblende 15 fokussiert wird. Daß die Modenblende 15 verlassende divergierende Laserlichtbündel wird von einem zweiten Objektiv 16, das zumindest bezüglich der sphärischen Aberration korrigiert ist, in ein Parallellichtbündel umgeformt. Das zweite Objektiv 16, das den in der Modenblende 15 liegenden Laserfokus nach Unendlich abbildet, wandelt die die Modenblende 15 verlassende Kugelwelle in eine ebene Welle.

Hierbei ist zu bemerken, daß das vom zweiten Objektiv 16 ausgehende Laserlichtbündel einen runden Querschnitt aufweist. Lediglich zur Verdeutlichung der Strahlführung in der optischen Abtastvorrichtung ist in Figur 2 das das zweite Objektiv 16 verlassende Laserlichtbündel mit einem größeren Durchmesser dargestellt als in Figur 1.

Dieses Laserlichtbündel trifft auf eine anamorphotische Aufweiteanordnung 12, die aus Keilprismen 17, 19 aufgebaut ist. Jeweils zwei Keilprismen 17, 19 sind dabei so angeordnet, daß ihre Keilkanten $17'$, $19'$ jeweils auf entgegengesetzten Seiten der optischen Achse 18 angeordnet sind. Das Laserlichtbündel erfährt durch die anamorphotische Aufweiteanordnung 12 in der in Figur 1 dargestellten Ebene Strahlaufweitung, so daß sein Querschnitt vergrößert wird, während in der dazu senkrechten Ebene, die in Figur 2 dargestellt, der Querschnitt des Laserlichtbündels unverändert bleibt.

Anschließend an die anamorphotische Aufweiteanordnung 12 ist als Pupillenvergrößerer ein afokales Vario-Objektiv 13 vorgesehen, das je nach Bedarf eine Pupillenvergrößerung bewirkt, ohne daß dabei eine Änderung der Querschnittsform des Laserlichtstrahls herbeigeführt wird. Das Vario-Objektiv 13 bildet dabei den vom zweiten Objektiv der Grundaufweiteobtik 11 nach Unendlich abgebildeten Laserfokus von Unendlich nach Unendlich ab und beleuchtet ein sich drehendes Spiegelrad 22, das den Laserlichtstrahl auf einen als Scan-Obtik dienenden Hohlspiegel 21 wirft, der den Laserlichtstrahl in eine Abtastebene 23 fokussiert.

In der Abtastebene ist in nicht dargestellter Weise eine Materialbahn angeordnet, die in Richtung des Pfeiles A in Figur 2 transportiert wird.

Der telezentrisch angeordnete Hohlspiegel 21 bildet dabei die Oberfläche des Spiegelrades 22 nach Unendlich ab. Dabei bestimmt die jeweils vom Laserlichtstrahl beaufschlagte Spiegelradfacette die Apertur der Abtastvorrichtung.

Anstelle des Hohlspiegels 21 kann auch ein nicht dargestelltes telezentrisches oder divergentes f θ -Objektiv als Scan-Optik verwendet werden. Dabei fällt die hintere Pupille des f θ-Objektivs mit den jeweiligen Facetten des Spiegelrades 22 zusammen.

Durch das sich drehende Spiegelrad 22 wird der Laserlichtstrahl über den Hohlspiegel 21 bewegt, so daß sich der Abtastlichtfleck in der Abtastebene 23 in Richtung des Doppelpfeils B periodisch verschiebt. Die Abtastrichtung B steht dabei in bekannter Weise senkrecht auf der Materialvorschubrichtung A.

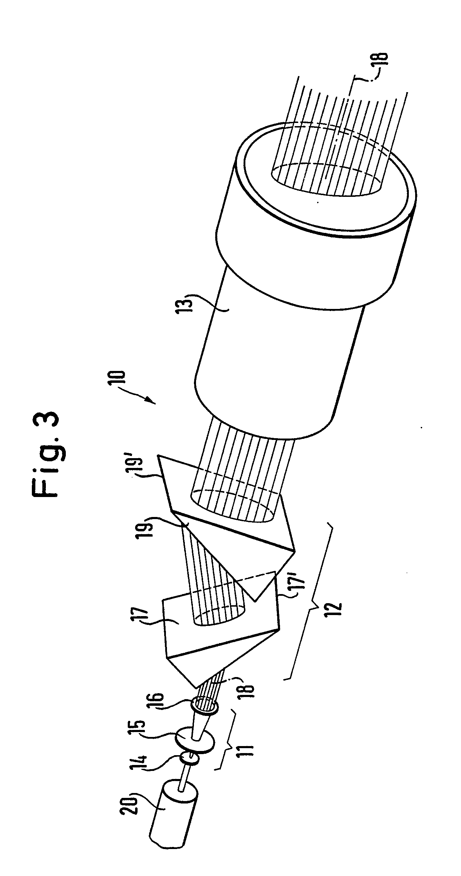

Wie Figur 3 zeigt, wird eine Strahlaufweitoptik

10 vom Laser 20 beleuchtet, dessen Ausgangslichtstrahl von einer Grundaufweiteoptik 11, die nach dem Prinzip eines astronomischen Fernrohrs aufgebaut ist und ein erstes Objektiv 14 und ein zweites Objektiv 16 aufweist, in dessen gemeinsamen Brennpunkt eine Modenblende 15 angeordnet ist, ohne Quer schnittswandlung aufgeweitet. Das aufgeweitete Laserlichtbündel wird anschließend von einer anamorphotischen Aufweiteanordnung, die zwei Keilprismen 17 und 19 aufweist in einer Richtung senkrecht zur optischen Achse aufgeweitet, so daß ein Laserlichtbündel mit elliptischem Querschnitt entsteht. Dabei wird der Hauptstrahl 18 von der anamorphotischen Aufweiteanordnung 12 parallel zu sich selbst versetzt, so daß die optische Achse der Strahlaufweiteoptik 10, die vor der anamorphotischen Aufweiteanordnung 12 mit der optischen Achse der Grundaufweiteoptik 11 zusammenfällt anschließend mit der optischen Achse des Vario-Objektivs 13 zusammenfällt.

Die reine Parallelversetzung des Hauptstrahls 18 wird in der anamorphotischen Aufweiteanordnung 12 dadurch erreicht, daß der Hauptstrahl 18 und damit das Laserlichtbündel mit der ersten Fläche jedes der beiden Keilprismen 17 und 19 stets den gleichen Einfallswinkel bildet und daß die Keilkanten 17' und 19' auf entgegengesetzten Seiten der optischen Achse angeordnet sind.

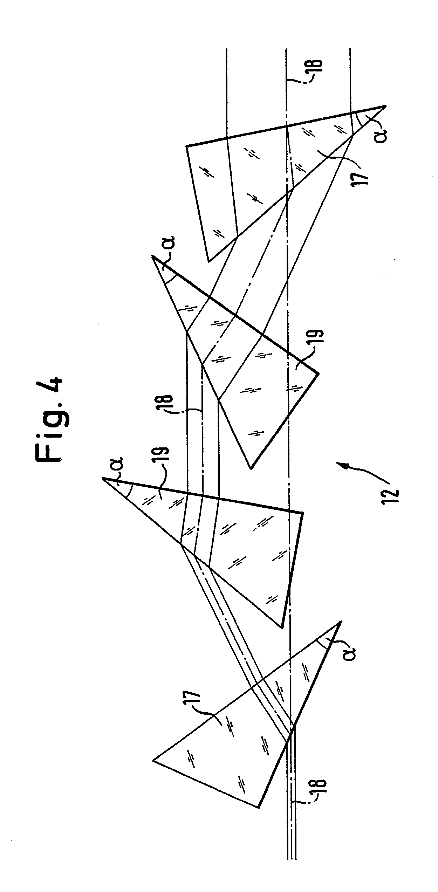

In Figur 4 ist eine weitere anamorphotische Aufweiteanordnung 12 dargestellt, die vier Keilprismen 17, 19 aufweist, wobei jedes Keilprisma 17, 19 den gleichen Keilwinkel α besitzt. Dabei sind die ersten beiden Keilprismen 17, 19 so angeordnet, daß sie eine Parallelversetzung des Hauptstrahls 18 bewirken, die entgegengesetzt gleich der von den beiden hinteren Keilprismen 19, 17 erzeugten Parallelversetzung ist. Hierdurch wird erreicht, daß die optische Achse der gesamten anamorphotischen Aufweiteanordnung erhalten bleibt, wobei eine erhebliche anamorphotische Aufweitung mit einem Aufweitungsfaktor bis circa 80 mal möglich ist.

Die Festlegung der Breite des Abtastlichtflecks in Abtastrichtung B und der Länge des Abtastlichtflecks in Vor schubrichtung A, durch die das Auflösungsvermögen der optischen Abtastvorrichtung in Bezug auf die Fehlererkennung bzw. die lückenlose Überwachung der Materialbahn sichergestellt wird, erfolgt bei der beschriebenen Abtastvorrichtung wie folgt:

Durch die anamorphotische Aufweiteanordnung wird der Laserlichtstrahl in Abtastrichtung B so weit aufgeweitet, daß jede Spiegelradfacette vollständig ausgeleuchtet, bzw. überleuchtet wird. Damit bestimmt jede Spiegelradfacette die notwendige Apertur der Abtastvorrichtung, um eine beugungsbegrenzte minimale Fleckbreite zu erreichen. Dabei werden infolge der eindimensionalen Strahlaufweitung für die Aus-bzw. Überleuchtung der Spiegelradfacetten die Energieverluste so gering wie möglich gehalten, da nur geringe Energieverluste an den Enden der Spiegelradfacetten auftreten, an denen sie an die jeweiligen benachbarten Facetten übergehen.

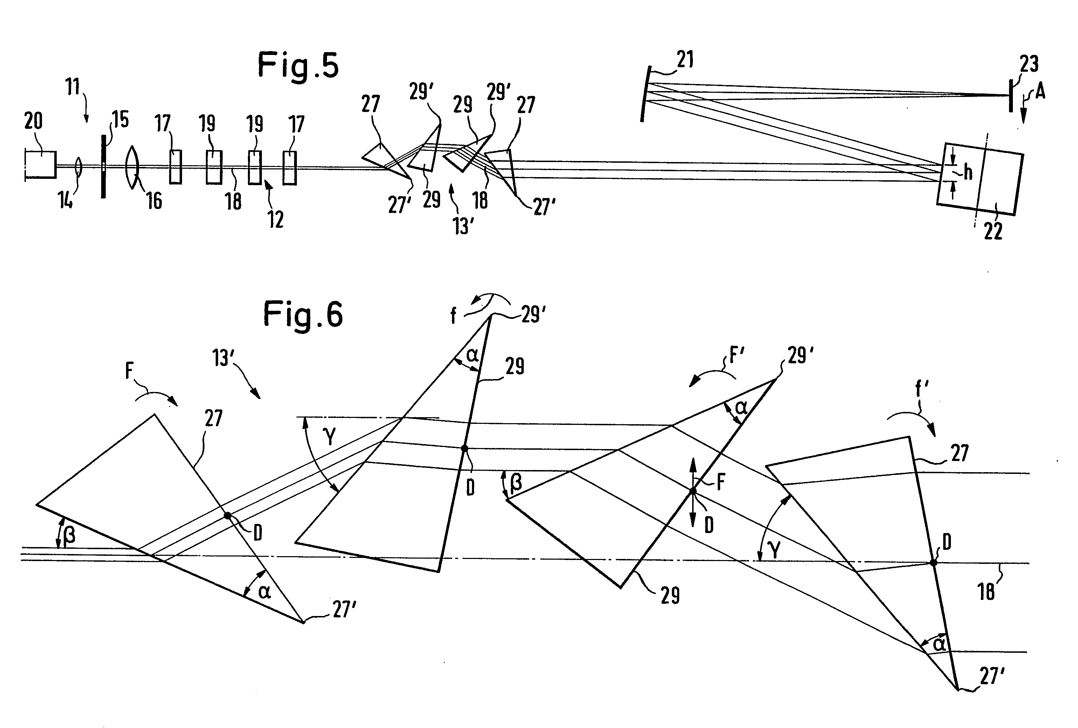

Die Änderung der Länge des Abtastlichtflecks senkrecht zur Abtastrichtung B die für eine Anpassung des Abtastlichtflecks an die Vorschubgeschwindigkeit der Materialbahn erforderlich ist, wird durch das afokale Vario-Objektiv 13 erreicht. Dadurch läßt sich die Strahlhöhe h auf dem Spiegelrad 22 verändern, wodurch auch die Apertur in dieser Richtung verändert wird, was zu einer beu-gungsbegrenzten Veränderung der Abtastlichtfleck-länge führt. Die in Fig. 5 dargestellte optische Abtastvorrichtung entspricht im wesentlichen der bisher beschriebenen Abtastvorrichtung und unterscheidet sich lediglich im Aufbau des afokalen Pu-pillenvergrößerers 13'. Dieser afokale Pupillenver-größerer 13' ist aus vier Teilprismen 27, 29 gebildet, wobei jeweils die Keilkanten 27', 29' von zwei aufeinanderfolgend angeordneten Keilprismen auf verschiedenen Seiten der optischen Achse der Abtastvorrichtung angeordnet sind.

Der afokale Pupillenvergrößerer 13', der dazu dient, die Breite h des Lichtflecks auf dem Spiegelrad 22 einzustellen, wird anhand von Fig. 6 näher beschrieben.

Der afokale Pupillenvergrößerer 13' weist wie in Fig. 6 dargestellt, vier Keilprismen 27, 29 auf, wobei jedes Keilprisma 27, 29 den gleichen Keilwinkel α besitzt. Dabei sind die ersten beiden Keilprismen 27, 29 so angeordnet, daß ihre Keilkanten 27', 29' jeweils aufeinander entgegengesetzten Seiten der optischen Achse liegen, die vor und hinter dem ersten bzw. letzten Teilprisma 27 mit dem Hauptstrahl 18 zusammenfällt. Dadurch bewirken die ersten beiden Keilprismen 27, 29 eine Parallelversetzung des Hauptstrahls 18 gegenüber der optischen Achse. In entsprechender Weise sind die hinteren beiden Keilprismen 29, 27 so angeordnet, daß auch ihre Keilkanten 29', 27' auf unterschiedlichen Seiten der optischen Achse liegen, so daß auch diese eine Parallelversetzung des Hauptstrahls bewirken, die entgegengesetzt gleich dem von den vorderen beiden Keilprismen 27, 29 bewirkten Strahlversatz ist.

Jedes der Keilprismen ist so angeordnet, daß es um eine durch ihre hintere brechende Fläche verlaufende Drehachse D drehbar ist, die senkrecht zur optischen Achse und parallel zur entsprechenden Keilkante 27', 29' des entsprechenden Keilprismas 27, 29 verläuft. Gleichzeitig mit der Drehung der Keilprismen 27, 29 um ihre Drehachse D können auch die Keilprismen 27, 29 bzw. ihre Drehachse senkrecht zur optischen Achse verschoben werden, wie dies beispielsweise durch den Doppelpfeil F für das dritte Keilprisma 29 angedeutet ist, so daß der Abstand der Drehachsen D zur optischen Achse veränderbar ist.

In nicht dargestellter Weise können die Keilprismen 27, 29 so miteinander mechanisch oder elektronisch gekoppelt sein, daß das erste und das dritte Keilprisma 27 bzw. 29 jeweils entgegengesetzt zueinander um den gleichen Winkelbetrag gedreht werden, wie durch die Pfeile F, F' in Fig. 6 angedeutet.

Ebenso sind das zweite und das vierte Keilprisma 29 bzw. 27 miteinander gekoppelt, so daß sie jeweils gleichzeitig um den gleichen Winkelbetrag und entgegengesetzt zueinander verdreht werden, wie die Pfeile f, f' in Fig. 6 andeuten.

Dabei lassen sich durch die Drehung des ersten und des zweiten Keilprismas die Winkel $\beta$ zwischen der optischen Achse und der Lichteintrittsfläche des ersten bzw. dritten Keilprismas 27 bzw. 29 einstellen. Eine Drehung des zweiten und des vierten Keilprismas 29 bzw. 27 um die entsprechende Drehachse D im Sinne der Pfeile f, f' bewirkt eine gleiche Einstellung der Winkel $\gamma$ zwischen der Strahleintrittsfläche des zweiten bzw. vierten Keilprismas 29 bis 27 und der Richtung der optischen Achse.

Bei einer Änderung der Strahlaufweitung werden also die beiden inneren Keilprismen 29 und die beiden äußeren Keilprismen, deren Keilkanten 29' bzw. 27' jeweils auf der selben Seite der optischen Achse liegen gleichsinnig gedreht.

Gleichzeitig mit der Drehung der Keilprismen 27, 29 können die beiden mittleren Keilprismen 29 gemeinsam soweit gegenüber der optischen Achse verschoben werden, daß der Hauptstrahl 18 des aufzuweisenden Lichtstrahls jeweils durch den Mittelpunkt der hinteren brechenden Fläche der Keilprismen 29 also durch den Mittelpunkt der Lichtaustrittsfläche der Keilprismen 29 verläuft.

Dabei ist es vorteilhaft die beiden mittleren Keilprismen 29 um die gleiche Wegstrecke zu verschieben.

Soll nun die Länge des Abtastlichtflecks in der Abtastebene senkrecht zur Abtastrichtung eingestellt werden, so brauchen die Keilprismen 27, 29 des afokalen Pupillenvergrößerers 13' nur wie beschrieben verdreht und verschoben zu werden. Die einfachste Möglichkeit hierzu besteht darin, daß die Drehung des ersten und letzten Keilprismas 27 mittels einer nicht dargestellten Hilfsskala, die den Aufweitungsfaktor angibt, eingestellt wird. In entsprechender Weise können dann die mittleren Keilprismen 29 ebenfalls verdreht und verschoben werden, wobei die Drehung bzw. Verschiebung mittels nicht dargestellter Hilfsskalen kontrolliert wird. Hierbei wird also jedes Keilprisma 27, 29 einzeln justiert.

Um die Justierung inbesondere der beiden mittleren Keilprismen zu erleichtern, können diese auf einem gemeinsamen ebenfalls nicht dargestellten Schlitten angeordnet werden, so daß sie gleichzeitig um gleiche Wege verschiebbar sind.

Um den Justieraufwand weiter herabzusetzen, ist auch eine mechanische Koppelung der Drehbewegungen sowie der Verschiebebewegungen der Keilprismen 27, 29 möglich, wofür jedoch wegen der Komplexität der verschiedenen Bewegungen die Koppelung nur mittels einer Kurvensteuerung durchführbar ist. Besonders vorteilhaft ist es, wenn die Bewegungen der einzelnen Keilprismen 27, 29 elektronisch überwacht werden, wenn also eine elektronische Koppelung der verschiedenen Bewegungen vorgenommen wird.

Wird die optische Abtastvorrichtung wahlweise mit verschiedenen Lichtquellen mit unterschiedlichen Wellenlängen benutzt, so müßte für jede zu verwendende Wellenlänge eine gesonderte Justierung des afokalen Pupillenvergrößerers 13' vorgenommen werden, damit der Abtastlichtfleck in der Abtastebene stets gleich ausgebildet ist. Da dies ausgesprochen aufwendig und umständlich ist, kann eine achromatische Anordnung von Keilprismen vorgesehen werden, bei der jeweils das erste Keilprisma eines Prismenpaares 27, 29 aus einer anderen Glassorte gefertigt ist, als das zweite Keilprisma 29, 27.

## Ansprüche

1. Optische Abtastvorrichtung zum zeilenweisen Abtasten einer Materialbahn quer zu deren Vorschubrichtung mit einem Laser, dessen Ausgangslichtstrahl von einer anamorphotischen Strahlaufweiteoptik über ein Spiegelrad auf eine Scanoptik gelenkt wird, die einen Abtastlichtfleck in einer Abtastebene erzeugt, dadurch **gekennzeichnet,** daß die Strahlaufweiteoptik von einer nur ebene Flächen aufweisenden anamorphotischen Aufweiteanordnung (12) und einem afokalen Pupillenvergrößerer (13) gebildet wird, wobei vorzugsweise die Strahlaufweiteoptik zusätzlich eine Grundaufweiteoptik (11) enthält, die ein erstes Objektiv (14) mit kurzer Brennweite, in dessen hinterem Brennpunkt eine Modenblende (15) angeordnet ist, und ein zweites Objektiv (16) mit relativ langer Brennweite aufweist, dessen vorderer Brennpunkt mit dem hinteren Brennpunkt des ersten Objektivs (14) zusammenfällt.

2. Abtastvorrichtung nach Anspruch 1, dadurch **gekennzeichnet,** daß die Grundaufweiteoptik (11) aus einem Objektiv mit negativer Brennweite und einem Objektiv mit positiver Brennweite in Form eines umgedrehten Galilei-Fernrohrs gebildet ist, und daß bevorzugt das zweite Objektiv (16) wenigstens bezüglich der sphärischen Aberration korrigiert ist.

3. Abtastvorrichtung nach einem der vorhergehenden Ansprüche, dadurch **gekennzeichnet,** daß die anamorphotische Aufweiteanordnung (12) zumindest ein Keilprisma (17) enthält, wobei insbesondere die anamorphotische Aufweiteanordnung (12) zwei Keilprismen (17, 19) umfaßt, deren Keilkanten (17', 19') senkrecht zur optischen Achse (18) und senkrecht zur Abtastrichtung angeordnet sind, und/oder daß die Keilprismen (17, 19) den gleichen Keilwinkel (α) aufweisen.

4. Abtastvorrichtung nach Anspruch 3, dadurch **gekennzeichnet,** daß die Keilkante (17') des ersten Keilprismas (17) auf einer Seite der optischen Achse (18) angeordnet ist, während die Keilkante (19') des zweiten Keilprismas (19) auf der anderen Seite der optischen Achse (18) liegt, und/oder daß der Hauptstrahl (18) mit der ersten brechenden Fläche jedes Keilprismas (17, 19) den gleichen Winkel einschließt, und/oder daß die anamorphotische Aufweiteanordnung (12) eine gerade Anzahl von Keilprismen (17, 19) aufweist, von denen je zwei eine Parallelversetzung des Hauptstrahls (18) bewirken, wobei vorzugsweise die anamorphotische Aufweiteanordnung (12) aus vier Keilprismen (17, 19) gebildet ist und wobei die Parallelversetzung des Hauptstrahls durch die ersten beiden Keilprismen (17, 19) entgegengesetzt gleich der durch die zweiten beiden Keilprismen (19, 17) bewirkten Parallelversetzung ist.

5. Abtastvorrichtung nach einem der vorhergehenden Ansprüche, dadurch **gekennzeichnet,** daß der Pupillenvergrößerer von einem afokalen Vario-Objektiv (13) gebildet ist, wobei vorzugsweise das Vario-Objektiv (13) wenigstens bezüglich der sphärischen Aberration korrigiert ist, und/oder daß der afokale Pupillenvergrößerer von einem anamorphotischen Vario-Objektiv (13) gebildet ist.

6. Abtastvorrichtung nach einem der Ansprüche 1 bis 4, dadurch **gekennzeichnet,** daß der afokale Pupillenvergrößerer von einer nur ebene Flächen aufweisenden zweiten anamorphotischen Aufweiteanordnung (13') gebildet ist, wobei bevorzugt die zweite anamorphotische Aufweiteanordnung (13') einen variablen Aufweitungsfaktor aufweist, und/oder daß der afokale Pupillenvergrößerer (13') zumindest ein Keilprisma (27) enthält, das um eine parallel zu seiner Keilkante (27') verlaufenden Drehachse drehbar ist, wobei insbesondere der afokale Pupillenvergrößerer (13') zwei drehbare Keilprismen (27, 29) umfaßt, deren Keilkanten (27', 29') senkrecht zur optischen Achse und parallel zur Abtastrichtung (D) angeordnet sind, und wobei weiter vorzugsweise der Abstand der Drehachsen der Keilprismen (27, 29) insbesondere senkrecht zur optischen Achse verstellbar ist.

7. Abtastvorrichtung nach Ansprüche 6, dadurch **gekennzeichnet,** daß der afokale Pupillenvergrößerer (13') aus Keilprismen (27, 29) besteht, die alle den gleichen Keilwinkel (α) aufweisen, und/oder daß die Keilkante (27') des ersten Keilprismas (27) des afokalen Pupillenvergrößerers (13') auf einer Seite der optischen Achse angeordnet ist, während die Keilkante (29') des zweiten Keilprismas (29) auf der anderen Seite der optischen Achse liegt, und/oder daß die Dreh- und/oder Verschiebebewegungen der beiden Keilprismen (27, 29) des afokalen Pupillenvergrößerers (13') mechanisch oder elektronisch miteinander gekoppelt sind, und/oder daß der afokale Pupillenvergrößerer (13') aus einer geraden Anzahl von Keilprismen (27, 29) besteht, von denen je zwei eine Parallelversetzung des Hauptstrahls (18) bewirken.

8. Abtastvorrichtung nach einem der Ansprüche 6 und 7, dadurch **gekennzeichnet,** daß der afokale Pupillenvergrößerer (13') aus einer Anzahl von Keilprismen (27, 29) besteht, die drehbar und verschiebbar sind und deren Dreh- und/oder Verschiebebedingungen mechanisch oder elektronisch miteinander gekoppelt sind, oder daß der afokale Pupillenvergrößerer aus vier Teilprismen (27, 29) gebildet ist, wobei die Parallelversetzung des Hauptstrahls (18) durch die ersten beiden Teilprismen (27, 29) entgegengesetzt gleich der durch die zweiten beiden Keilprismen (27, 29) bewirkten Parallelversetzung ist, und/oder daß die Keilprismen (27, 29) des afokalen Pupillenvergrößerers (13') um eine senkrecht zur optischen Achse verschiebbare, durch den Mittelpunkt einer brechenden Fläche des Keilprismas verlaufenden Drehachse drehbar sind, wobei insbesondere die Drehachsen der Keilprismen (17, 29) in deren längeren brechenden Fläche angeordnet sind.

9. Abtastvorrichtung nach Anspruch 7 oder 8, dadurch **gekennzeichnet,** daß der afokale Pupillenvergrößerer (13') vier dreh- und verschiebbare Keilprismen (27, 29) aufweist, wobei die Drehrichtungen des ersten und des letzten Keilprismas (27) gleich und entgegengesetzt zur Drehrichtung des zweiten und dritten Keilprismas sind, wobei die Größe des Drehwinkels zwischen Strahlaustrittsfläche des Keilprismas und optische Achse des ersten und des dritten Keilprismas (27 bzw. 29) gleich sind und wobei die Drehwinkel des zweiten und des vierten Keilprismas gleich sind, und/oder daß die beiden ersten Keilprismen (27, 29) und die beiden hinteren Keilprismen (27, 29) des afokalen Pupillen vergrößerers (13') jeweils gemeinsam senkrecht zur optischen Achse und parallel zur Aufweitungsrichtung verschiebbar angeordnet sind, und/oder daß die beiden mittleren Keilprismen (29) des aus vier Keilprismen bestehenden afokalen Pupillenvergrößerers (13') gemeinsam senkrecht zur optischen Achse und parallel zur Aufweitungsrichtung verschiebbar angeordnet sind.

10. Abtastvorrichtung nach einem der Ansprüche 6 bis 9, dadurch **gekennzeichnet,** daß jeweils zwei aufeinanderfolgende Keilprismen (27, 29) des aus einer geraden Anzahl von Keilprismen (27, 29) bestehenden afokalen Pupillenvergrößerers (13') aus Gläsern mit unterschiedlicher Dispersion aufgebaut sind, so daß Farbfehler des Pupillenvergrößerers jeweils paarweise korrigiert werden.

Fig. 1

Fig. 2

Fig. 3

EP 0 363 666 A2

EP 0 363 666 A2

# Fig. 4

Fig.5

Fig.6